# FASCICULE DE BREVET EUROPEEN

(11) **EP 3 283 759 B1**
(45) Date de publication et mention de la délivrance du brevet: **13.11.2019**
(21) Numéro de dépôt: 16714836.0
(22) Date de dépôt: 08.04.2016
(51) Int. Cl.: B63B 35/44, F03G 3/00, F03B 13/10, F03B 13/00

(54) **SYSTEME DE STOCKAGE ET PRODUCTION D'ENERGIE ELECTRIQUE EN MILIEU MARIN**
SPEICHER- UND EZEUGUNGSSYSTEM VON ELEKTRISCHER ENERGIE IN MARINER UMGEBUNG
SYSTEM FOR STORAGE AND PRODUCTION OF ELECTRIC ENERGY IN A MARINE ENVIRONMENT

(30) Priorité: 14.04.2015 BE 201505239
(43) Date de publication de la demande: 21.02.2018
(73) Titulaire: Stevens, Louis, 1330 Rixensart (BE)
(72) Inventeur: Stevens, Louis, 1330 Rixensart (BE)
(74) Mandataire: Colens, Alain M.G.M.
(86) Numéro de dépôt international: PCT/EP2016/056911
(87) Numéro de publication internationale: WO 2016/165941

(56) Documents cités:
- WO-A1-2009/012575
- WO-A1-2012/034104
- WO-A1-2014/078064
- WO-A1-2014/160522
- DE-A1-102006 059 233

## Description

La présente invention propose un système de stockage et de production d'énergie en milieu aquatique, en particulier en milieu marin.

Le document de brevet WO 2014/160522 décrit l'art antérieur et propose un tel système comportant une plate-forme et un ensemble de lests déployé sur un fond marin et chaque lest pouvant être déplacé d'une profondeur à une autre profondeur par un treuil présent sur la plate-forme. Ce système comprend un moyen de localisation et de préhension des lests commandé à distance, indépendant ou relié au système de treuil. Selon un mode de réalisation, le lest peut comprendre un volume de gaz qui peut varier sous l'action de valves, éventuellement télécommandées, et être ainsi partiellement auto-flottant.

Le document WO 2009/012575 décrit un système pour stocker et extraire de l'énergie électrique grâce à l'utilisation du potentiel hydrostatique d'éléments flottants et non flottants.

A grande échelle, la plate-forme nécessaire pour stocker les lests est cependant de dimension telle que le vent et les courants de surface vont générer des coûts d'ancrage ou de stabilisation très importants.

La présente invention se propose entre autres d'éviter cet inconvénient.

Selon l'invention les lests en position haute de stockage d'énergie sont stabilisés à une profondeur telle que l'effet du vent et des courants sur le système est fortement diminué.

La solution comprend en effet la réalisation d'un système dans lequel au moins un flotteur portant les lests est subdivisé en en moins deux parties reliées par un câble de retenue, dont la plus grande comprend le ou les lests immergés et a l'avantage d'être située plusieurs dizaines de mètres sous la surface (là ou le courant est moins fort). Ce flotteur sera désigné USPV dans la suite de la présente description (Unité de Suspension à Profondeur Variable).

La partie immergée du flotteur comprend un volume de gaz en contact avec la pression environnante, éventuellement prévu dans une enveloppe souple. Lorsque le ou les lests seront décrochés (un à un), pour éviter que la partie immergée du flotteur ne remonte et prenne le vent ou le courant de surface, le volume de gaz sera réduit sous l'effet de la pression environnante, car il sera descendu à une profondeur plus importante via le câble de retenue qui sera partiellement débloqué, et ainsi cette partie du flotteur assurera une force vers le haut plus faible et qui sera adaptée à la force vers le bas, également plus faible, du ou des lests restants.

Le volume de gaz peut être contenu dans un ballon ou "parachute" ou dans la partie supérieure d'une enceinte rigide, mais en contact avec l'eau via des orifices situés sous la cavité.

A titre d'exemple, la partie du flotteur en surface peut présenter un volume de 100 M3. La partie immergée du flotteur peut présenter un volume de 300m3. Le poids d'un lest peut être de l'ordre de 100 tonnes. La longueur du câble principal sera déterminée par la profondeur du fond marin, soit par exemple, 4.000 mètres.

L'invention est davantage décrite ci-après sous forme de divers modes de réalisation et en se référant aux figures dans lesquelles :
La figure 1 représente plusieurs USPV dont le niveau de charge est différent et pour lesquels la profondeur du parachute (ballon ou enveloppe souple de la partie immergée du flotteur) est différente.
La figure 2 représente un moyen de solidariser plusieurs USPV via une poutrelle (201) fixée à chacune des USPV via un câble ou un système de rotule.
La figure 3 représente une autre façon de solidariser les USPV, en les positionnant sur une barge unique (301).
La figure 4 représente une façon de maintenir la ou les USPV en une position donnée via des câbles d'ancrage.
La figure 5 représente une autre façon de maintenir la ou les USPV en une position donnée via des propulseurs à hélice.
La figure 6 représente les différents niveau de charge des USPV et de position du lest sur le palan .
Les figures 7a et 7b montre une variante dans laquelle, les USPV et le palan sont montés sur une barge.
La figure 8 représente une vue détaillée d'un lest suspendu à un crochet via un câble d'accroche.
La figure 9 représente différentes positions et configurations des lests.
La figure 10 représente plusieurs variantes pour le flotteur submergé selon l'invention.
La figure 11, représente, le parachute de levage tel que décrit sur la figure 1 et à droite un ballast partiellement rempli d'eau et partiellement rempli d'un gaz.
La figure 12 représente une autre façon de solidariser les USPV entre elles.
La figure 13 représente une structure comprenant une pluralité de ballast reliée à une barge à plusieurs treuils ou poulies.
La figure 14 représente une variante de la structure de la figure 13 dans laquelle chaque ballast comprend une enveloppe souple formant vessie ou parachute.

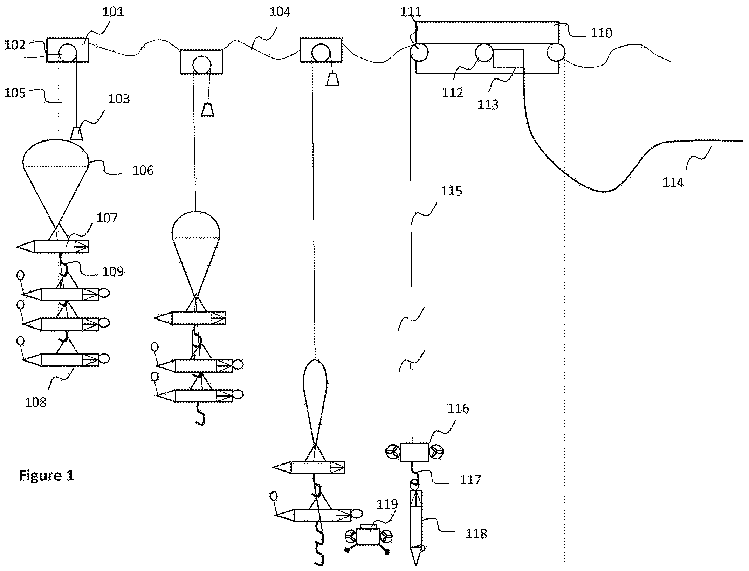

De manière plus détaillée, la figure 1 représente plusieurs USPV dont le niveau de charge est différent et pour lesquels la profondeur du parachute (ballon ou enveloppe souple) est différente. Le flotteur ou barge (101) contient un cabestan ou une poulie (102) reliés par un câble (105), d'un côté au parachute (106) et de l'autre à une masse (103) afin d'équilibrer les charges. En variante, le flotteur ou barge (101) peut comprendre un treuil afin de modifier la longueur du câble d'accroche à la place du cabestan ou de la poulie. Le parachute permet de suspendre une pluralité de lests (107 et 108) dont au moins un ne pourra être détaché (107) afin de maintenir en permanence une charge quelque soit le niveau de volume (et donc la profondeur) du parachute. Chaque lest est suspendu au parachute par un crochet et un câble (109) dont la longueur peut avantageusement varier d'un lest à l'autre afin que ceux ci ne soient pas suspendus à la même hauteur et ne s'entrechoquent pas.

A proximité des USPV, se trouve une barge sur laquelle se trouvent un ou plusieurs palans, ou treuils ou ascenseurs à poulie permettant de descendre puis remonter un par un les lests depuis les USPV jusqu'au fond de la mer et ainsi respectivement libérer ou stocker de l'électricité via un générateur/moteur électrique relié au palan via des poulies motrices ou relié aux treuils ou à l'ascenseur à poulie.

La figure 1 montre la barge (110), le câble d'un double palan (115), un jeu de poulies motrices (112), un jeu de poulies démultiplicatrices (111), le moteur générateur électrique (113) est relié aux poulies motrices, il peut être relié aux poulies via un réducteur à engrenage (non présenté sur cette vue)
Le niveau de la mer est représenté par 104. Le moteur/générateur (113) et la barge (110) sont reliés au réseau électrique via un câble électrique sous marin représenté par 114.
Le câble (115) du palan est relié à un crochet (117) qui peut être mû horizontalement à l'aide d'un ROV (116) (ROV =remotely operated vehicule ou robot sous marin).
Dans l'exemple du double palan, chacun des deux crochets est relié à un ROV (le deuxième crochet n'est pas représenté sur la figure 1).
Un autre ROV indépendant peut être utilisé pour faciliter les opérations d'accrochage et décrochage des lests depuis les USPV (119)

La barge 110 peut être ancrée au fond marin ou maintenue par un ou plusieurs propulseurs à hélice. Si elle est ancrée, elle peut être mue horizontalement en reliant les câbles d'ancrage à des treuils qui peuvent être commandés de telle sorte que la barge soit positionnée à proximité du USPV en cours de chargement ou de déchargement ou à proximité de la zone de stockage sur le fond marin.

Les USPV peuvent être autonomes ou reliés entre elles de plusieurs façons différentes.

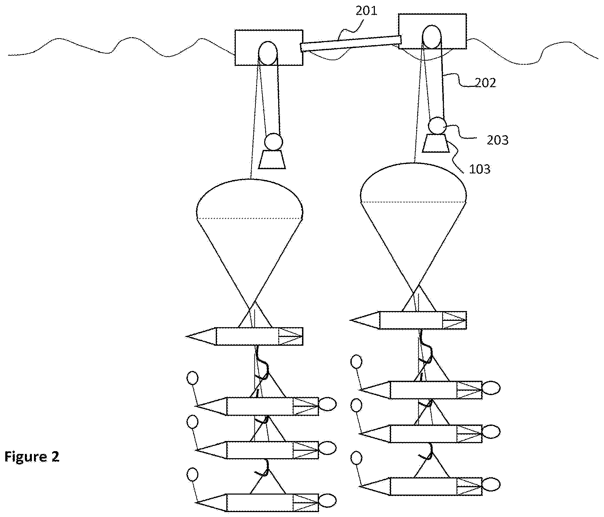

La figure 2 représente un moyen de solidariser plusieurs USPV via une poutrelle (201) fixée à chacune des USPV via un câble ou une rotule (non présentés sur la vue) Cette figure représente aussi un système permettant de démultiplier la force du câble (202) entre le flotteur et le contrepoids (103) via un jeu de poulies (203). Cela offre un avantage en ce que la distance que doit parcourir le contrepoids peut ainsi être réduite par rapport à la variation de profondeur que doit pouvoir subir le parachute (106)

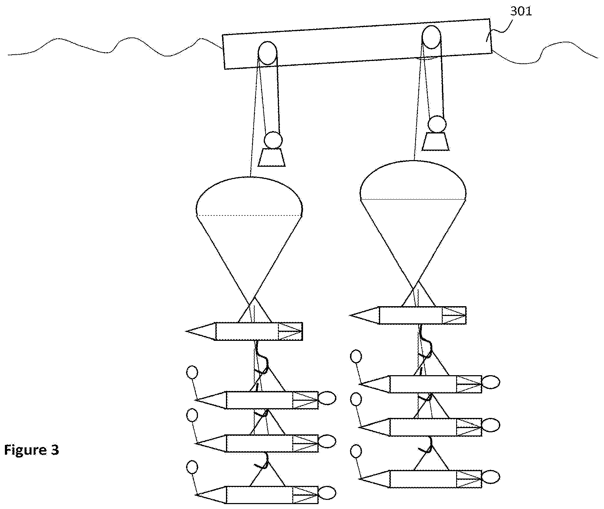

La figure 3 représente une autre façon de solidariser les USPV, en les positionnant sur une barge unique (301). Sur cette figure, seuls 2 USPV sont représentés.

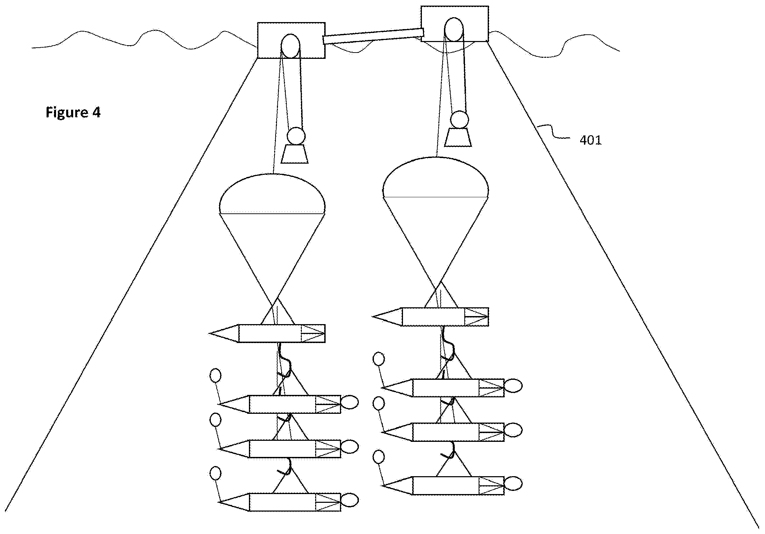

La figure 4 représente une façon de maintenir la ou les USPV en une position donnée, ici, via des câbles d'ancrage 401 (l'ancre n'est pas représentée sur la vue)

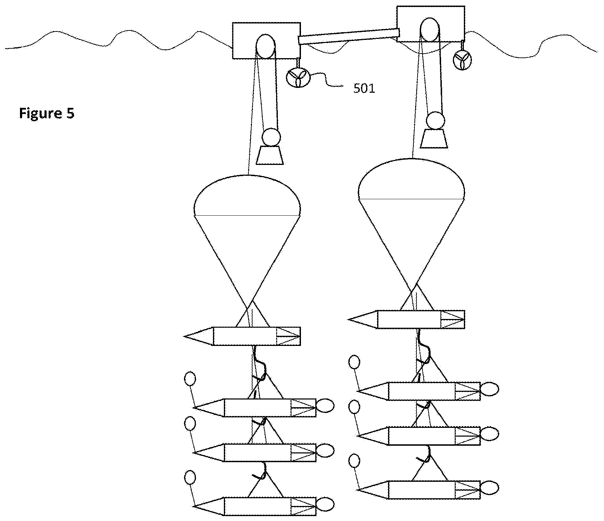

La figure 5 représente une autre façon de maintenir la ou les USPV en une position donnée, ici, via des propulseurs à hélice (501)

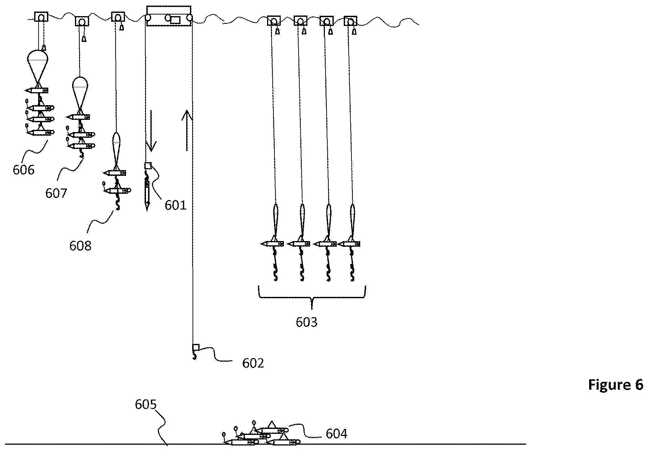

La figure 6 représente les différents niveaux de charge des USPV et de position du lest sur le palan .
La position 606 montre un USPV chargé de 3 lests mobiles et 1 lest fixe, le parachute a un volume maximal et est positionné à une profondeur faible.
La position 607 montre un USPV chargé de 2 lests mobiles et 1 lest fixe, le parachute est alors positionné à une profondeur un peu plus importante afin que la pression plus importante réduise le volume et la poussée d'archimède exercée par le prachute, afin qu'elle n'ait à retenir que 2 lests.
La position 608 montre un USPV chargé avec un seul lest mobile
La position 603 montre un USPV vide sans aucun lest mobile et comprenant donc uniquement un lest fixe. Ce lest fixe permet d'éviter que le parachute ne remonte car même à une profondeur plus importante, il subsiste un volume résiduel qui peut ne pas être compensé par le poids relatif de la membrane du parachute à vide.

Le crochet 601 est chargé d'un lest pendant que le crochet 602 (l'autre crochet du double palan) n'est pas chargé. Que la plateforme fonctionne en mode stockage ou déstockage (respectivement remontée ou descente successive des lests un par un), il y a toujours un des crochets du double palan chargé et un autre non chargé.

La position 604 montre des lests entreposés sur le fond marin (605) .

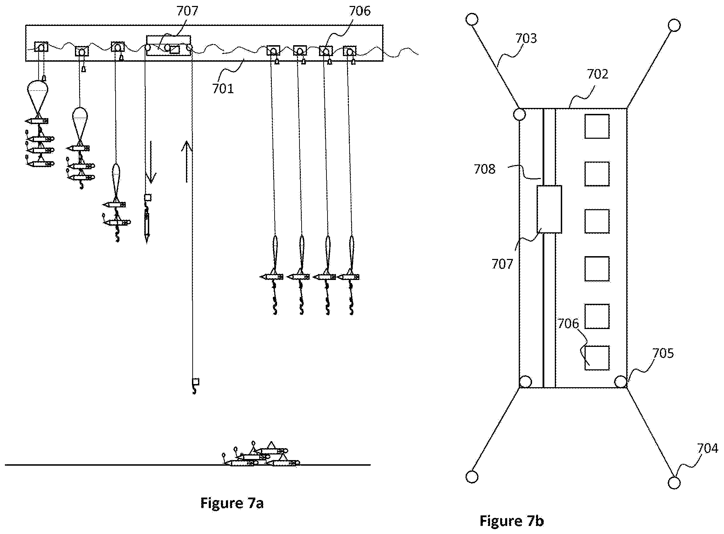

Les figures 7a et 7b montre une variante dans laquelle, les USPV (706)et le palan (707) sont montés sur la même structure flottante (ici une barge) 701 vue de côté et 702 vue du dessus.
Le palan peut être monté sur des rails (708)
La barge (702) peut être ancrée via un ou plusieurs câbles d'ancrage (703), une ou plusieurs ancres (704) et un ou plusieurs treuils (705)

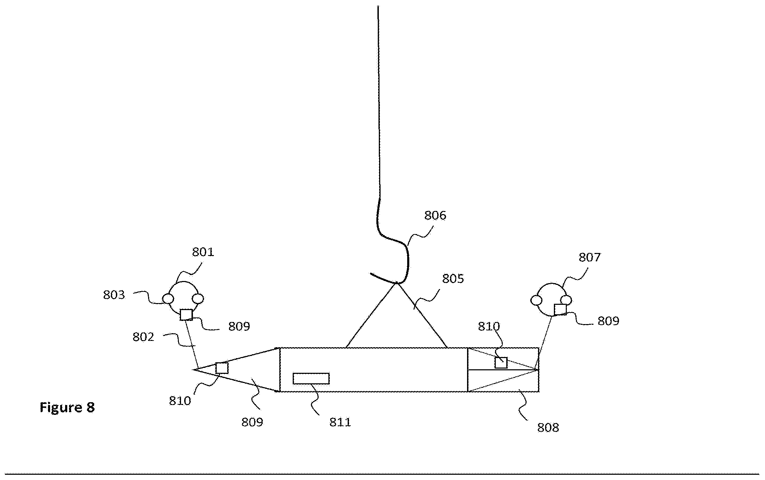

La figure 8 représente une vue détaillée d'un lest (809) suspendu à un crochet (806) via un câble d'accroche (805) fixé à deux points d'appuis du lest de telle sorte que le centre de gravité du lest soit situé entre les deux points, afin de maintenir le lest en position horizontale. Un empennage (808) équivalent à ceux trouvés sur les torpilles permet ainsi au lest de se mettre face au sens du courant horizontal et ainsi minimiser la force de frottement hydrodynamique du courant et ainsi réduire le coût de maintient des USPV au dessus de la même zone (qu'il s'agisse de propulseurs ou de câble d'ancrage).

Au moins deux anses (807) d'accrochage sont prévues pour accrocher les lests au crochet du palan: l'une à l'avant (pour les mouvements ascendants) et l'autre à l'arrière (pour les mouvements descendants). Ces anses sont avantageusement constituées d'un câble (par exemple en acier tréfilé inoxydable) pourvues de flotteurs (803) permettant de maintenir des anses en suspension au dessus du lest et ainsi faciliter les opérations d'accrochage notamment lorsque les lests reposent sur le fond marin.
Elles sont reliées au lest par un petit câble (802) afin de faciliter les opérations d'accrochage et décrochage et faciliter le travail éventuel du ROV auxiliaire (119 sur la figure 1)

Des émetteurs de signaux lumineux (809, 810)ou sonar (811)ou autre type d'onde sont prévus et disposés en différents endroits du lest ou des anses d'accrochage, pour faciliter les opérations d'accrochage/décrochage, notamment si celles ci sont automatisées.

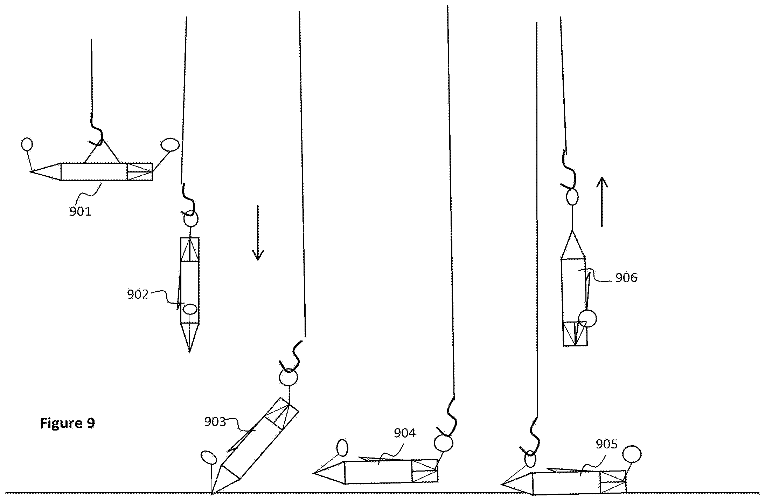

La figure 9 représente différentes position des lests.
La position 901 représente un lest accroché à un parachute (position point haut) proche de la surface, il est horizontal afin de limiter la force de frottement hydrodynamique du courant. La position 902 représente un lest en phase de descente, dans ce cas le lest entraîne le crochet du palan vers le bas La position 903 représente un lest en train d'être déposé sur le fond marin, I

La position 904 représente un lest posé horizontalement sur le fond marin, juste après son arrivée (descente), le crochet du palan est encore fixé à la anse inférieure.
La position 905 représente un lest posé horizontalement sur le fond marin, juste avant qu'il ne soit remonté, le crochet du palan est accroché à la anse supérieure .
La position 906 représente un lest en phase d'ascension, la partie avant du lest est donc positionnée au dessus de la partie arrière (pourvue de l'empennage)

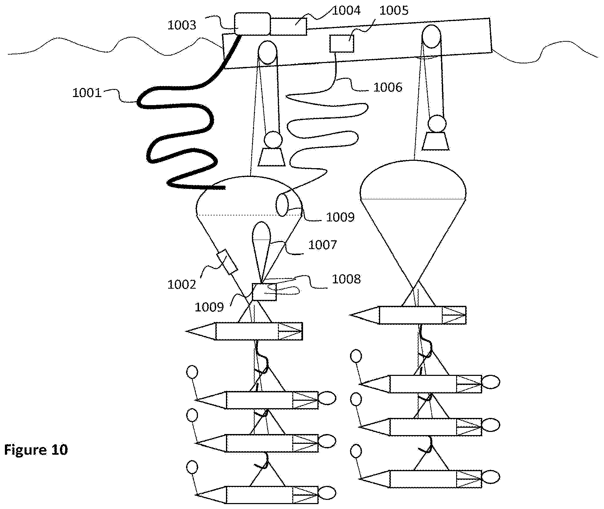

La figure 10 représente plusieurs variantes:
Une valve (1001) peut être ouverte de façon commandée à distance ou automatiquement, elle permet de libérer un éventuel surplus de gaz et ainsi palier à des aléas de fonctionnement, en particulier si le parachute venait à remonter plus que prévu (par exemple à cause d'un échauffement du gaz contenu à l'intérieur) et ainsi limiter le risque que le parachute ne remonte brutalement à la surface.
Un conduit flexible (1001) peut relier le parachute à un compresseur (1004) lui même pourvu d'un éventuel réservoir tampon (1003) afin d'augmenter ou réduire la quantité d'air se trouvant dans le parachute. Ce dispositif permet également de rééquilibrer les système en cas d'aléas. Ou de rééquilibrer temporairement le système par exemple lorsque le parachute est remonté à une position supérieure et que l'air contenu est refroidi. Cet air va se réchauffer avec la température ambiante et une variation de la quantité d'air contenue dans le parachute peut être souhaitable, même si la variation de la profondeur peut également jouer ce rôle.

Une autre façon d'accélérer le réchauffement du gaz contenu dans le parachute, par exemple juste après la remontée du niveau d'un parachute (détente = refroidissement) est d'injecter une quantité de chaleur via une résistance électrique (1009) reliée via un câble électrique (1006) à une batterie (1005) ou tout autre source d'électricité.

Un dispositif de sécurité permet d'augmenter rapidement le pouvoir flottant de l'USPV, il comprend un parachute auxiliaire (1007) partiellement rempli d'un gaz et fixé par un câble (1008) au parachute principal. Ce parachute peut être libéré de façon commandée à distance (unité de commande 1009) ou automatique si besoin, lorsque l'USPV amorce une descente trop importante et par exemple lorsque le flotteur supérieur atteint un niveau moyen d'immersion trop important. En libérant ce parachute, celui ci va remonter et voir son volume augmenter, il pourra ainsi générer une poussée d'archimède supérieure et compenser un éventuel déséquilibre.

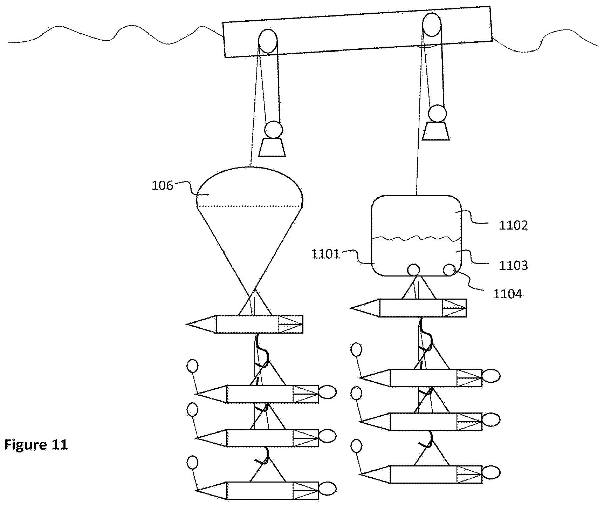

Sur la figure 11, sont représentés à gauche, le parachute de levage tel que décrit sur la figure 1 (106) et à droite un ballast partiellement rempli d'eau et partiellement rempli d'un gaz.
Ce ballast joue le même rôle que le parachute, son pouvoir lestant va augmenter lorsque la profondeur du ballast se réduira et inversement.
La variation de la quantité d'eau peut se faire automatiquement puisque le ballast est percé d'un ou plusieurs orifices () permettant à l'eau d'entrer et comprimer la poche de gaz lorsque le ballast est descendu. Elle peut aussi se faire de façon commandée en injectant du gaz ou en pompant ou injectant de l'eau de façon commandée via des tuyaux flexibles, compresseurs, pompes et valves non présentés sur la figure. L'injection de gaz permet alors si besoin de modifier le pouvoir flottant sans modifier la profondeur. De la même façon, du gaz peut être injecté dans le parachute pour la même fonction.

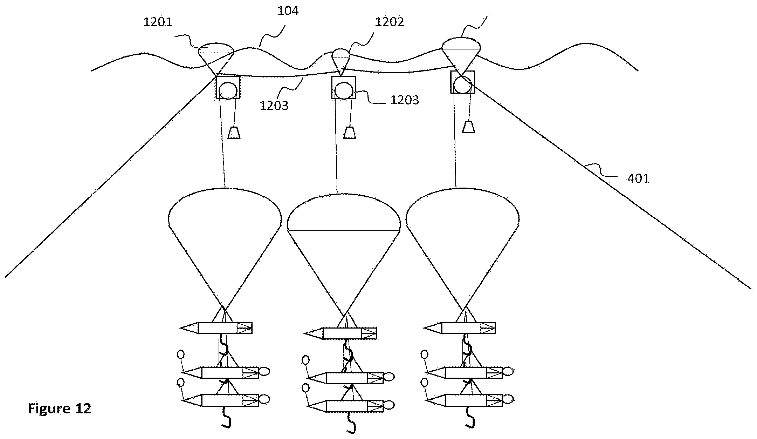

La figure 12 représente un autre façon de solidariser les USPV entre elles. Dans ce cas, elles sont reliées par un câble (1203) via le flotteur supérieure ce flotteur pouvant être rigide (tel que présenté sur la figure 1, 101) ou souple, c'est à dire avec un parachute tel que présenté sur cette figure (120 ou 1202).

L'ensemble d'USPV ainsi fixées les une aux autres peuvent également être ancrées via un ou plusieurs câbles d'ancrage (401), les parachutes constituant les flotteurs supérieurs peuvent avoir un volume adapté afin de reprendre l'ensemble des forces auxquels ils pourront être soumis, ces forces peuvent être différentes selon qu'il s'agisse d'une USPV reliée uniquement à d'autres USPV ou une USPV reliée également à un câble d'ancrage.

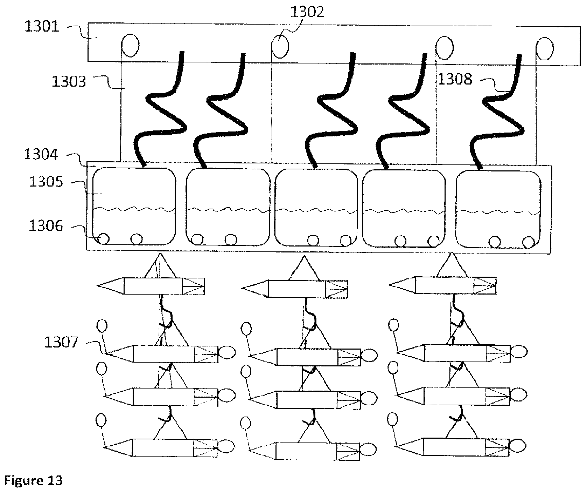

La figure 13 représente une barge 1301 comprenant plusieurs treuils (ou poulies) 1302 reliés à autant de câbles d'accroche (1303) pour soutenir une structure 1304 comprenant une pluralité de ballast (dont le nombre peut être différent du nombre de câbles 1303) . Les ballast comprennent un ou plusieurs orifices d'entrée et sortie d'eau (1306) et au moins un conduit d'amenée et/ou sortie de gaz comprimé (1308). Le dispositif comprend également des câbles permettant d'accrocher des lests (1307) le nombre de points de fixation de ces lests et/ou le nombre de lest peut être différent du nombre de ballast et également différent du nombre de câble 1303.

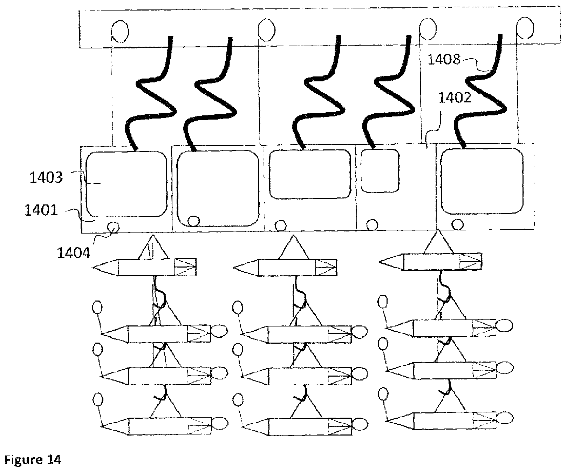

La figure 14 représente une variante de la fig 13, les ballast sont logés dans une structure 1401 (éventuellement compartimentée) dans laquelle se trouve une ou plusieurs vessies (ou parachute) 103 eux même reliés à des conduits de gaz comprimé. Dans cette variante, chaque compartiment comprend aussi un orifice 1404.

On comprendra que le dispositif peut comprendre une pluralité de plateformes "palans" et qu'une pluralité de palans (ou de double palans) peut être positionnée sur une seule barge.

Le nombre de lests par USPV est donné dans les figures à titre d'exemple mais n'est pas limitatif. Un seul lest ou un nombre bien plus important peuvent être stockés par USPV.

L'invention a été illustrée essentiellement dans un mode "double palan" mais d'autres systèmes équivalents de levage peuvent être envisagés (ascenseurs, poulies motrices, cabestan, etc).

Les crochets peuvent être à fermeture complète automatique ou commandée à distance, si besoin, pour plus de sécurité.

Dans toutes les variantes, les USPV peuvent être reliées par diverses connexions électriques, hydrauliques et/ou pneumatiques.

## Revendications

1. Système de stockage et de production d'énergie électrique en milieu marin par effet gravitationnel dans lequel un ou plusieurs lests sont descendus puis remontés d'une position haute à une position basse, à l'aide d'au moins un câble (115) relié à une élément principal flottant en surface (110), telle une barge ou une plateforme, comprenant un générateur/moteur (113) actionné par ou actionnant ledit câble, **caractérisé en ce que** lesdits lests (107, 108) sont susceptibles d'être stabilisés en position haute à une profondeur déterminée en étant solidarisés, à un élément partiellement flottant (106) à ladite profondeur, lui même relié par un câble de retenue (105)à un élément secondaire flottant en surface (101) qui est muni d'un moyen pour faire varier la longueur dudit câble de retenue (105), l'élément partiellement flottant (106) comprenant un volume de gaz compressible en fonction de la pression environnante.

2. Système selon la revendication 1 dans lequel le volume de gaz est délimité par une paroi souple.

3. Système selon n'importe laquelle des revendications précédentes dans lequel il y a plusieurs éléments partiellement flottants (106) avec éléments flottants secondaires (101).

4. Système selon n'importe laquelle des revendications précédentes dans lequel l'élément flottant en surface (110) est une barge à palan.

5. Système selon la revendication précédente dans lequel il y a plusieurs palans (111).

6. Système selon n'importe laquelle des revendications précédentes dans lequel les différents éléments partiellement flottants (106) sont solidarisés entre eux.

7. Système selon n'importe laquelle des revendications précédentes dans lequel les différents éléments flottants en surface sont solidarisés entre eux.

8. Système selon n'importe laquelle des revendications précédentes dans lequel le câble de retenue (105) peut être déroulé sur une longueur variant de 5 à 150 mètres, de préférence de 10 à 100 mètres.

9. Système selon n'importe laquelle des revendications précédentes dans lequel les lests sont solidarisables, désolidarisables de l'élément partiellement flottant par accrochage-décrochage.

10. Système selon la revendication précédente dans lequel l'accrochage - décrochage se fait par un moyen sous-marin indépendant (119), tel un robot.

11. Système selon n'importe laquelle des revendications précédentes dans lequel il y a plusieurs éléments partiellement flottants (106) et les câbles de retenues sont déroulés à des longueurs différentes.

12. Système selon les revendications 1 et 3 à 11 dans lequel il y un ou une pluralité de ballasts (1304) avec orifice d'entrée et sortie d'eau (1306).

13. Système selon la revendication précédente dans lequel les ballasts sont munis d'au moins un conduit d'amenée et/ou de sortie de gaz comprimé (1308).

14. Système selon la revendication 12 dans lequel les ballast comprennent des vessies (1403) elles-mêmes reliées à des conduits de gaz comprimé.

15. Système de stockage et de production d'énergie électrique en milieu aquatique par effet gravitationnel dans lequel un ou plusieurs lests sont descendus puis remontés d'une position haute à une position basse, à l'aide d'au moins un câble (115) relié à une élément flottant en surface (110), telle une barge ou une plateforme, comprenant un générateur/moteur actionné par ou actionnant ledit câble, **caractérisé en ce que**
lesdits lests sont susceptibles d'être stabilisés en position haute à une profondeur déterminée en étant solidarisés à un flotteur, ledit flotteur comprenant un élément partiellement flottant (106) à ladite profondeur, lui même relié par un câble de retenue (105) à un deuxième élément flottant en surface (101) qui est muni d'un moyen pour faire varier la longueur dudit câble de retenue (105), l'élément partiellement flottant comprenant un volume de gaz compressible en fonction de la pression environnante.

## Patentansprüche

1. System zur Speicherung und zur Erzeugung von elektrischer Energie in mariner Umgebung durch die Gravitationswirkung, bei dem ein Ballast oder mehrere Ballaste von einer hohen Position bis zu einer tiefen Position hinunter und dann herauf gebracht werden, dies mit Hilfe von mindestens einem Kabel (115), das mit einem auf der Oberfläche schwimmenden Hauptelement (110), wie einem Flachboot oder einer Plattform, verbunden ist, umfassend einen Generator / Motor (113), der von dem besagten Kabel aktiviert wird oder das besagten Kabel aktiviert,
**dadurch gekennzeichnet, dass**
die besagten Ballaste (107, 108) in hoher Position, in einer determinierten Tiefe, stabilisiert werden können, indem sie mit einem teilweise in der besagten Tiefe schwimmenden Element (106) verbunden sind, das seinerseits mittels eines Haltekabels (105) mit einem an der Oberfläche schwimmenden sekundären Element (101) verbunden ist, das mit einem Mittel zur Veränderung der Länge des besagten Haltekabels (105) versehen ist, wobei das teilweise schwimmende Element (106) ein im Verhältnis zu dem Umgebungsdruck stehendes Volumen von verdichtbarem Gas umfasst.

2. System nach dem Anspruch 1, bei dem das Gasvolumen durch eine biegsame Wand begrenzt ist.

3. System nach irgendeinem der vorangehenden Ansprüche, bei dem mehrere teilweise schwimmende Elemente (106) mit schwimmenden sekundären Elementen (101) vorhanden sind.

4. System nach irgendeinem der vorangehenden Ansprüche, bei dem das auf der Oberfläche schwimmende Element (110) ein Flachboot mit Flaschenzug ist.

5. System nach dem vorangehenden Anspruch, bei dem mehrere Flaschenzüge (111) vorhanden sind.

6. System nach irgendeinem der vorangehenden Ansprüche, bei dem die verschiedenen teilweise schwimmenden Elemente (106) miteinander verbunden sind.

7. System nach irgendeinem der vorangehenden Ansprüche, bei dem die verschiedenen an der Oberfläche schwimmenden Elemente miteinander verbunden sind.

8. System nach irgendeinem der vorangehenden Ansprüche, bei dem das Haltekabel (105) auf eine Länge von 5 bis zu 150 m, vorzugsweise von 10 bis zu 100 m ausgerollt werden kann.

9. System nach irgendeinem der vorangehenden Ansprüche, bei dem die Ballaste mit dem teilweise schwimmenden Element durch einhaken-aushaken verbunden und getrennt werden können.

10. System nach dem vorangehenden Anspruch, bei dem das Einhaken und Aushaken mittels einer unabhängigen unterseeischen Vorrichtung (119), wie durch einen Robot, erfolgt.

11. System nach irgendeinem der vorangehenden Ansprüche, bei dem mehrere teilweise schwimmende Elemente (106) vorhanden sind und die Haltekabel auf unterschiedliche Längen ausgerollt werden.

12. System nach den Ansprüchen 1 und 3 bis 11, bei dem ein oder eine Mehrzahl von Ballasten (1304) mit einer Wassereintritts- und Wasseraustrittsöffnung (1306) vorhanden ist.

13. System nach dem vorangehenden Anspruch, bei dem die Ballaste mit mindestens einer Druckgaseintritts- und Druckgasaustrittsleitung (1308) versehen sind.

14. System nach dem Anspruch 12, bei dem die Ballaste Blasen (1403) umfassen, die ihrerseits mit Druckgasleitungen verbunden sind.

15. System zur Speicherung und zur Erzeugung von elektrischer Energie in mariner Umgebung durch die Gravitationswirkung, bei dem ein Ballest oder mehrere Ballaste von einer hohen Position bis zu einer tiefen Position hinunter und dann herauf gebracht werden, dies mit Hilfe von mindestens einem Kabel (115), das mit einem an der Oberfläche schwimmenden Hauptelement (110), wie einem Flachboot oder einer Plattform, verbunden ist, umfassend einen Generator / Motor (113), der von dem besagten Kabel aktiviert wird oder das besagten Kabel aktiviert,
**dadurch gekennzeichnet, dass**
die besagten Ballaste in hoher Position, in einer determinierten Tiefe stabilisiert werden können, indem sie mit einem Schwimmkörper verbunden sind, wobei der besagte Schwimmkörper ein teilweise in der besagten Tiefe schwimmendes Element (106) umfasst, das seinerseits mittels eines Haltekabels (105) mit einem zweiten an der Oberfläche schwimmenden Element (101) verbunden ist, das mit einem Mittel zur Veränderung der Länge des besagten Haltekabels (105) versehen ist, wobei das teilweise schwimmende Element (106) ein im Verhältnis zu dem Umgebungsdruck stehendes Volumen von verdichtbarem Gas umfasst.

## Claims

1. Electrical energy storage and production system in a marine environment by gravity, where at least one ballast is lowered and raised between a high position and a low position thanks to at least one cable (115) connected to a surface-floating element (110), such as a barge or a platform, whereby the system includes a generator/engine (113) that triggers or is triggered by said cable, **characterized in that** said ballasts (107, 108) may be stabilized in high position at a specified depth when secured together with a partially floating element (106) at said depth, said element being connected through a retaining cable (105) to a secondary surface-floating element (101) that is equipped with means to change the length of said cable (105), whereby the partially floating element (106) includes a volume of compressible gas according to the environmental pressure.

2. System according to the claim 1, where the gas volume is delineated by a flexible wrap.

3. System according any one of the previous claims, where there are several partially floating elements (106) with secondary floating elements (101).

4. System according any one of the previous claims, where the surface-floating element (110) is a barge with a block and tackle.

5. System according to the previous claim, where there are several blocks and tackles (111).

6. System according any one of the previous claims, where the various partially floating elements (106) are secured with each other.

7. System according any one of the previous claims, where the various surface-floating elements are secured with each other.

8. System according any one of the previous claims, where the retaining cable (105) can be unrolled from 5 to 150 m, preferably from 10 to 100 m.

9. System according any one of the previous claims, where the ballasts can be detached from, attached to the partially floating element by hooking-unhooking.

10. System according to the previous claim, where the hooking-unhooking is accomplished via an independent submarine (119), like a robot.

11. System according any one of the previous claims, where there are several partially floating elements (106) and where the retaining cables are unrolled at different lengths.

12. System according to the claims 1 and 3 to 11, where there is at least one ballast (1304) with water intake and outtake hole (1306).

13. System according to the previous claim, where the ballasts include at least one pressured gas intake and/or outtake hose (1308).

14. System according to claim 12, where the ballasts include bladders (1403) connected to pressured gas hoses.

15. Electrical energy storage and production system in a marine environment by gravity, where at least one ballast is lowered and raised between a high position and a low position thanks to at least one cable (115) connected to a surface-floating element (110), such as a barge or a platform, whereby the system includes a generator/engine that triggers or is triggered by said cable, **characterized in that** said ballasts may be stabilized in high position at a specified depth when secured together with a float, said float including a partially floating element (106) at said depth, said element being connected through a retaining cable (105) to a second surface-floating element (101) that is equipped with means to change the length of said cable (105), whereby the partially floating element includes a volume of compressible gas according to the environmental pressure.
